# EUROPÄISCHE PATENTANMELDUNG

(11) **EP 0 859 187 A2**
(43) Veröffentlichungstag der Anmeldung: **19.08.1998**
(21) Anmeldenummer: 98890006.4
(22) Anmeldetag: 12.01.1998
(51) Int. Cl.: F17C 1/04, F17C 1/16

(54) **Schutzschicht für Druckgasbehälter**

(30) Priorität: 22.01.1997 AT 88/97
(71) Anmelder: Jos. Heiser vormals J. Winter's Sohn Aktiengesellschaft, 3291 Gaming (AT)
(72) Erfinder: Konul, Gürel, Dipl.-Ing. (M.sc.), 3291 Kienberg-Gaming (AT); Kladnig, Wolfgang, Dr., 3291 Kienberg-Gaming (AT)
(74) Vertreter: Pawloy, Peter Michael

(57) **Zusammenfassung**

Beschrieben wird ein starrer Hochdruckgasbehälter, welcher ganz oder teilweise aus faserverstärkten Materialien besteht, wobei der Hochdruckgasbehälter zumindest teilweise von einer Schutzschicht auf Basis von porenfreiem Polyurethan überzogen ist. Weiters wird die Verwendung einer Schutzschicht auf Basis von porenfreiem Polyurethan zur Beschichtung von starren Hochdruckgasbehältern, welcher ganz oder teilweise aus faserverstärkten Materialien bestehen, geoffenbart.

## Beschreibung

Die vorliegende Erfindung bezieht sich auf ganz oder teilweise aus faserverstärkten Materialien bestehende starre Hochdruckgasbehälter (welche allgemein auch Compositebehälter, Verbundwerkstoffbehälter oder Faserverbundbehälter genannt werden).

Der Einsatz von faserverstärkten (Kunststoff-)Materialien zur Herstellung von starren Hochdruckgasbehältern, insbesondere Druckgasflaschen, ist relativ neu und insofern vorteilhaft, als damit leichte, aber trotzdem mechanisch stabile und langlebige, vor allem gebrauchssichere Behälter für komprimierte Gase, wie beispielsweise Druckluft, Sauerstoff, Methan, Wasserstoff, Kohlensäure, erhalten werden können.

Derartige Leichtbaubehälter können in einer sogenannten Verbundbauweise hergestellt werden. Dabei werden gezielt leichte, aber hochfeste Werkstoffe, wie dünnwandiger Stahl, Aluminiumlegierung, hochfeste Kunststoffe, gegebenenfalls auch thermoplastische Kunststoffe, als starre "Innenseele" (häufig auch "Liner" genannt) verwendet. Diese Liner müssen, abgesehen von der erforderlichen mechanisch und chemischen Stabilität, auch für die verwendeten Gase undurchlässig und chemisch resistent sein.

Die eigentliche Verfestigung der Liner wird durch definierte Bewickelung mit anorganischen oder organischen hochfesten Fasern erhalten, deren hohe E-Module eine Spannungsaufnahme bei Druckbeaufschlagung infolge Füllung der Druckbehälter ermöglichen. Die Bewickelung erfolgt unter genau berechneten statischen und dynamischen Gesichtspunkten, wobei die Geometrie der Faserablage über den rotationssymmetrischen Körper nach streng definierten Wickelmustern mittels CNC-gesteuerten Maschinen festgelegt wird. Die Bewickelung kann im sogenannten "Naßverfahren", also unter Verwendung flüssiger Epoxiharzsysteme, oder im sogenannten "Trockenverfahren" unter Verwendung von Prepregbändern oder unter Verwendung von faserverstärkten Thermoplastbändern mittels Flammaufschmelzung, durchgeführt werden.

Der so hergestellte Wickelkörper ist nun als fertiger Druckbehälter anzusehen und potentiell einsetzbar.

Nachteilig wirken sich allerdings die vor allem in Querrichtung zur Faserwickelrichtung existierenden Kerbschlagempfindlichkeiten der Faserbündel der Bewicklung aus, d.h. es gibt insgesamt eine Empfindlichkeit der Faserbewicklung gegenüber mechanischer Einwirkungen, wie Stoß, Schlag, Kerbschlag oder Reibung.

Ziel der vorliegenden Erfindung ist es, die auf den starren Liner aufgebrachten Bewickelungen gegen Korrosion, Licht (Fasern), mechanischen Einwirkungen, wie beispielsweise Schlag, Stoß und Reibung, sowie Feuer bzw. Flammen zu schützen. Es ist an sich bekannt, auf den Wickelkörper eine Lackschicht oder einen thermoplastischen Schrumpfschlauch aufzubringen. Nachteilig ist bei diesen bekannten Überzügen jedoch die leichte mechanische und thermische Deformierbarkeit, womit nur ein ungenügender Schutz gewährleistet ist.

Gemäß der GB-1 365 249-A wird ein Tank gegen Hitze geschützt, indem durch Aufsprühen eine weiche Polyurethan-Schaumschicht vorgesehen wird, welche dann mit einer steifen Polyurethan-Schaumschicht bedeckt wird.

In der US-4 844 287 wird ein doppelwandiges Leck-Auffangsystem für unterirdische Lagertanks beschrieben, wobei der unterirdische Lagertank mit einer inneren Polymer-Auffangschicht, einem flüssigkeitsleitendes Gewebe und eine äussere Polymer-Auffangschicht umgeben ist. Während die Polymer-Innenschicht durch direktes Aufsprühen auf den Tank gebildet werden kann, wird die äussere Polymer-Auffangschicht durch Sprühbeschichten des Gewebes vor Aufbringen auf den Tank gebildet. Als mögliches Polymer wird Polyurethan genannt.

WO 90/12982 schließlich betrifft flexible Behälter für komprimierte Gase, welche Behälter mit einem - ebenfalls flexiblen - Schutzmaterial, wie Polyurethan, gegen Abrieb und Verschleiß beschichtet werden können.

Die vorliegende Erfindung betrifft nun ganz oder teilweise aus faserverstärkten Materialien bestehende starre Hochdruckgasbehälter, welche dadurch gekennzeichnet sind, daß der Hochdruckgasbehälter zumindest teilweise von einer Schutzschicht auf Basis von porenfreiem Polyurethan überzogen ist. Weiters betrifft die vorliegende Erfindung die Verwendung einer Schutzschicht auf Basis von porenfreiem Polyurethan zur Beschichtung von starren Hochdruckgasbehältern, welche ganz oder teilweise aus faserverstärkten Materialien bestehen.

Als Material für den Schutzüberzug wird erfindungsgemäß porenfreies, d.h. dichtes Polyurethan verwendet. Polyurethan (Kurzbezeichnung PU) umfaßt eine breite organische Reaktionsgruppe, welche aus der Reaktion von verschiedenen Isocyanaten mit Polyolverbindungen entsteht und nicht nur für Schaumstoffe (hohlporiges PU, offenporig, geschlossenporig), sondern auch als dichtes PU, als organischer Thermosetting-Werkstoff, Verwendung findet.

Das erfindungsgemäß für den Schutzüberzug verwendete PU-System ist ein gieß- oder sprühfähiges System, welches sich z.B. aus Diphenylmethan-diisocyanat (MDI) und einem PolyetherpolyolSystem, gegebenenfalls unter Zugabe sekundärer oder tertiärer Amine als Beschleuniger, reaktiv und dicht (d.h. porenfrei) ausbilden kann.

Das PU-Material ist beliebig einfärbbar und kann durch Zugabe z.B. von Phosphorsäureestern auch flammhemmend ausgerüstet werden, es kann ferner in sehr dünner Schicht am Wickelkörper aufgebracht werden und ist damit auch nicht gewichtsbeeinträchtigend.

Der so geschützte Körper kann teilummantelt oder vollummantelt sein.

Unterhalb dieser dichten PU-Schutzhülle befindet sich die Faserbewicklung mit Thermoplastband oder mit Epoxyharzeinbettung, welche durch das PU-Material in keiner Weise beeinträchtigt wird. Die Verbindung des PU-Materials mit der Faser/Matrixschicht ist ferner dauerhaft und nur mittels größtem mechanischem Einsatz (Schälmesser) ablösbar.

Der aufgebrachte PU-Schutz ist mechanisch äußerst stabil und kann speziell zur schlagzähen Ausrüstung von Druckbehältern für folgende Einsatzgebiete herangezogen werden:
- Tauchflaschen:: geprüfte Meerwasserbeständigkeit (Schutz vor Meerwasserkorrosion),
- Atemschutzbehälter:: Einsatz für Feuerwehrleute, Flieger, Extrembergsteiger (Schutz vor unsanftem Handling, Fall),
- Methangasbehälter:: Einbau im LKW und Automobil, Schutz vor Reibung während des Fahrens,
- Wasserstoffbehälter:: Schutz vor Reibung beim Transport im Trailer.

Als geeignete starre Behälter können sowohl teilumwickelte Materialverbundbehälter als auch vollumwickelte Vollkunststoffbehälter zum Einsatz kommen.

Bei teilumwickelten Materialverbundbehältern hat der verwendete Behälter beispielsweise eine Länge von 560 mm und einen Durchmesser von 135 mm (Inhalt: 6 Liter, Gewicht: 4,5 kg, Werkstoff: Stahl). Dieser Behälter wird am zylindrischen Teil mit einem Polyamid-Aramid-Band (Spiflexverfahren) umwickelt und damit verfestigt. Eine Materialverbundflasche Stahl/Kunststoff wird erhalten.

Zum mechanischen, chemisch-physikalischen und designkonformen Schutz, sowie auch zum Flammschutz wird diese Flasche dann erfindungsgemäß mit der Polyurethan (PU) -Mischung voll oder teilweise (entsprechend dem internationalen Regulativ) dicht beschichtet.

Beim vollumwickelten Behälter besteht die Seele aus einem Kunststoff, z.B. Thermoplastmaterial, Elastomer und dgl., mit einem bzw. mehreren Metalleinsätzen, insbesondere zum Aufnehmen des Ventiles, welcher Metalleinsatz mit dem Kunststoffmaterial gasdicht abschließen muß, jedoch noch nicht druckfest ist. Dieser Metalleinsatz wird anschließend mittels Faserverstärkung (Kohle-, Glas-, Aramidfaser und dgl.) in einem Epoxiharzsystem armiert, wobei eine Vollumwicklung des Behälters bis über beide Enden (Kugelkalotten) erforderlich ist.

Zum weiteren mechanischen und chemisch-physikalischen Schutz, sowie auch zum Flammschutz wird die erhaltene vollumwickelte Flasche, in analoger Weise wie oben, mit einer Polyurethanmischung dicht beschichtet.

In beiden Fällen resultiert eine leichte, druckbeständige starre Gasflasche, welche über die dichte PU-Schicht schlagzäh ausgerüstet ist.

Als Einsatzgebiet für eine solche Flasche kommt der Tauchsportbereich in Frage, sie ist jedoch auch als Atemschutzbehälter für die Feuerwehr, bei Extrem-Bergsport, Aviatik und im Spitalwesen verwendbar.

Die Aufbringung der schlagzähen dichten PU-Beschichtung erfolgt entweder in einem Tauchverfahren (langlebige PU-Reaktionssysteme) oder in einem Sprühverfahren (kurzlebige PU-Systeme) in Abhängigkeit von der sogenannten "offenen Zeit" (Topfzeit), also der Verarbeitbarkeit des Reaktivsystems.

Die Sprühverfahren sind wieder zu unterscheiden in Hoch(Druck >20 bar), Mittel- und Niederdruckverfahren (ca. 1 bar Druck), je nach der Druckbeaufschlagung der im Sprühverfahren verwendeten Sprühpistolen. Dabei werden die Reaktionskomponenten unter inniger Vermischung unter Druck unmittelbar vor dem rotierenden Objekt unter Ausbildung der dreidimensional vernetzten, dichten Polyurethanstruktur aktiviert.

Hochdruckverfahren arbeiten mit unterschiedlichen Sprühköpfen, auch sind die Eigenschaften des Mischungsansatzes unterschiedlich zu wählen. Das Niederdruckverfahren kann auch als Dosierverfahren ausgebildet sein (von Materialzufuhr und Sprühkopfausführung abhängig). Es ist ein Präzisionsverfahren mit computergesteuertem Mischkopf, wobei hohe Materialverluste, wie sie sonst beim Sprühen üblich sind, vermieden werden.

Beim Sprühverfahren sind die Flaschen horizontal eingespannt und werden unter Drehen mit den Reaktionskomponenten horizontal besprüht. Das Ein- und Ausspannen geschieht automatisch mittels Manipulatoren.

Insgesamt sind die Reaktionszeiten des PU-Systems beim Sprühen schnell, die Topfzeit des PU-Systems darf wenige Sekunden (Hochdruckprozeß), bzw. wenige Minuten (Niedruckprozeß) betragen.

Das Tauchverfahren hingegen arbeitet mit PU-Systemen mit einer Topfzeit von einigen Stunden. Die Flaschen werden kontinuierlich, z.B. an einem Kettenförderband in das Bad getaucht werden und anschließend wird die so erhaltene Tauchschicht (welche einige mm dick ist) ausreagieren gelassen. Dies erfolgt vorzugsweise in der Wärme, wobei auch vertikale Drehbewegungen vorteilhaft sind.

Resultieren müssen in allen Fällen Überzüge mit gummielastischen Eigenschaften (Shore Härten von 30 - 80 Shore-A, vorzugsweise 60 - 80 Shore-A) und dichter Struktur (porenfrei).

Die durch die PU-Systeme gebildeten Schutzüberzüge können durch Zugabe auch flammhemmend ausgerüstet werden. Chemisch gesehen sind solche Zusätze Verbindungen von organischen Phosphorsäureestern, bzw. chlorierten oder bromierten organischen Verbindungen (welche jedoch z.T. in gewissen Ländern nicht mehr zugelassen sind).

Silikon-modifizierte PU-Systeme, d.h. Co-Polymerisate mit dem Isocyanatsystem, wie sie z.B. von Dow Chemical, USA, vertrieben werden, sind per se flammhemmend. Ein Silikon-modifiziertes PU-System kann auch durch Zugabe von Silikonöl zur Polyol-Komponente (Polyetherpolyolsystem) vor Reaktion mit dem Isocyanat erhalten werden.

Bei einer Teilummantelung mit der dichten PU-Schutzschicht bleibt die Schulter einer mit Stahlliner ausgeführten Flasche frei: diese kann dann in üblicher Weise gekennzeichnet (Volumen, Leergewicht, Tara, Befüllmenge, TÜV-Abnahme, Eigentümer, Hersteller, Herstelldatum) und auch am Stahl umgestempelt werden.

Bei einer Vollummantelung mit der PU-Schutzschicht bei Vollkunststofflaschen gewährt der neue GEN-Entwurf (ICS 23.020.30 vom März 1996) als alternatives Kennzeichnungmittel ein Identitätsschild, welches in oder unter der äußeren Kunststoffschicht angebracht werden kann, also in diesem Fall eine Einprägung einer Etikette aus Plastik, Alu, oder einem sonstigem geeigneten Material in die dichte PU-Schicht, solange diese noch nicht ausreagiert ist. Die Etikettierung muß in solchem Fall bleibend (dauerhaft) angebracht sein.

### Beispiel 1:

Herstellung eines tauchfähigen PU-Systems mit zähelastischen Eigenschaften und einer Oberflächenhärte von 66 Shore A (25 Shore D).

Die Reaktivmischung wird hergestellt durch Vereinigung von Komponente A mit Komponente B unter Zugabe von Beschleuniger (Komponente C).
- Komponene A: Isocyanatsystem : Diphenylmethan-diisocyanatsystem (MDI). CNO-Gehalt 30-31 %Gew. Viskosität 110 mPa.
- Komponente B: Polyetherestersystem (OH-Gehalt: 8 Gew%), Viskosität: 1400 mPa.
- Komponente C: Diethylendiamin, Triethylentetramin.

Das Mischverhältnis beträgt 40 Teile A: 50 Teile B. Zugabe von 5 Teilen C, sowie 5 Teile Flammhemmer, z.B. Tri-Chlorethylphosphat, ggf. Farbpigmente oder Rußzusatz. Verarbeitungstemperatur: 25°C, Aushärtung bei 50°C während 30 min. Endprodukt: 2 - 3 mm Schichtstärke, Shore A 66. Steif, gummielastisch; Dichte 0,98 g/cm³.
Als kommerziell erhältliche Systeme können z.B. DESMODUR (Bayer AG) oder Baygal/Baymidur (Bayer AG) verwendet werden, wobei sekundäre oder tertiäre Amine, wie beispielsweise
Diethylendiamin, Triethylendiamin oder Triethylentetramin als Beschleuniger zum Einsatz kommen.

### Sprühverfahren:

- Komponente A: Isocyanatkomponente 75 Teile MDI Viskosität 2500 mPa (CNO-Gehalt;: 9,8 Gew%)
- Komponente B: Polyether-Polyol-System, 100 Teile OH-Gehalt 88 mg KOH/g), Viskosität 2100 mPa
- Komponente C: 0,2 - 0,5 % Beschleuniger (Diethylentriamin). Verarbeitung bei 25°C, das Reaktivgemisch wird im Sprühkopf vereinigt, Druck: 20 bar, Verarbeitungstemperatur 30 - 40°C.

### System: z.B. BAYTEC SPR-066 A (Bayer AG).

### Niederdruck-Dosiertechnik

Verwendet wurde ein kombiniertes PU-System, nämlich ein Polyester-modifiziertes System, vernetzt mit Isocyanat.
- Komponente A: MDI
- Komponente B: Adipinsäure Polyol-System (Polyesterpolyol)
- Komponente C: Triethylentetramin als tert.Amin (Beschleuniger)

Dosiertechnik: mittels Mehrkomponenten-Dosieranlage und Präzisionsdüse auf CNC-gesteuerter Maschine, der Mehrkomponenten Sprühkopf erlaubt auch das Aufbringen von gefüllten PU-Systemen. Füllstoffe können mit flammhemmden Mittel ausgerüstet sein (z.B. Aluminiumoxyd-Hydrat) .

### Anwendungsbereiche

Tauchflaschen mit 10 bis 18 Liter Inhalt;
Atemschutzflaschen mit 3 bis 10 Liter Inhalt;
Wasserstoff-Trailer Flaschen mit 60 bis 100 Lit Inhalt; Erdgasflaschen mit 60 bis 100 Lit Inhalt.

Die Schlagzähigkeit an soliden Meßkörpern wird normalerweise mittels der Schlagarbeit (Fallpendel) gemessen, wobei die Auswertung mittels des Schlagbiegeversuchs (DIN 53453) oder via der Messung des Schlagzugversuchs (DIN 53448) erfolgt. Messungen werden ab einer Schichtdicke von 3 mm durchgeführt. Für die erfindungsgemäße Beschichtung, welche auch eine Schichtstärke von 1 mm oder weniger aufweisen kann, sind derartige Messmethoden nicht anwendbar. CEN und ISO-Normen sehen für einen solchen Fall für Composite-Druckbehälter einen anderen praktischen Versuch vor, nämlich den sog. Fallversuch (auch Drop-Test oder Impact-Test genannt, CEN CEN/TC23/SC1/N53 und N54, CEN PREN 1245, ISO/TC58/SC3/WG11/N1 bis N3). Hiebei werden die mit Wasser befüllten Composite-Druckbehälter aus 1,2 m Höhe aus verschiedenen, definierten Positionen auf einen Betonbode bzw. auf Kieselbelag fallen gelassen. Es darf zu keiner Beschädigung des Behälters (Beschädigung der Bewicklungsfaser oder Gesamtbruch) kommen.

Bei Vergleichsversuchen von erfindungsgemäß beschichteten Composite-Druckbehältern mit lackbeschichteten Behältern bzw. mittels eines Schrumpfschlauch beschichteten Behältern wurde festgestellt, daß die erfindungsgemäß beschichteten Composite-Druckbehälter eine hohe Resistenz gegen die auftretenden Schlagenergien aufwiesen und den Drop-Test ohne jegliche Beschädigung überstanden.

Lackbeschichtete Behälter wiesen starke Beschädigungen auf, bei mit einem Schrumpfschlauch beschichteten Behältern kam es zu teilweisen Schäden an der nicht vom Schrumpfschlauch bedeckten Fläche, aber auch am Schlauch selbst.

## Patentansprüche

1. Starrer Hochdruckgasbehälter, welcher ganz oder teilweise aus faserverstärkten Materialien besteht, dadurch gekennzeichnet, daß der Hochdruckgasbehälter zumindest teilweise von einer Schutzschicht auf Basis von porenfreiem Polyurethan überzogen ist.

2. Hochdruckgasbehälter nach Anspruch 1, dadurch gekennzeichnet, daß die Schutzschicht eine Shore-Härte von 30 - 80 Shore-A aufweist.

3. Hochdruckgasbehälter nach Anspruch 1 oder 2, dadurch gekennzeichnet, daß die Schutzschicht flammhemmend ausgerüstet ist.

4. Hochdruckgasbehälter nach Anspruch 3, dadurch gekennzeichnet, daß die Schutzschicht als flammhemmenden Zusatz organische Phosphorsäureester enthält.

5. Hochdruckgasbehälter nach Anspruch 3, dadurch gekennzeichnet, daß die Schutzschicht durch ein Silikon-modifiziertes PU-System gebildet wird.

6. Verwendung einer Schutzschicht auf Basis von porenfreiem Polyurethan zur Beschichtung von starren Hochdruckgasbehältern, welche ganz oder teilweise aus faserverstärkten Materialien bestehen.

7. Verwendung nach Anspruch 6, dadurch gekennzeichnet, daß die Schutzschicht eine Shore-Härte von 30 - 80 Shore-A aufweist.

8. Verwendung nach Anspruch 6 oder 7, dadurch gekennzeichnet, daß die Schutzschicht flammhemmend ausgerüstet ist.

9. Verwendung nach Anspruch 8, dadurch gekennzeichnet, daß die Schutzschicht als flammhemmenden Zusatz organische Phosphorsäureester enthält.

10. Verwendung nach Anspruch 8, dadurch gekennzeichnet, daß die Schutzschicht durch ein Silikon-modifiziertes PU-System gebildet wird.
